# EUROPÄISCHE PATENTSCHRIFT

(11) **EP 1 608 902 B1**
(45) Veröffentlichungstag und Bekanntmachung des Hinweises auf die Patenterteilung: **16.08.2006**
(21) Anmeldenummer: 04716983.4
(22) Anmeldetag: 04.03.2004
(51) Int. Cl.: F16K 11/22, F16K 27/02

(54) **EINRICHTUNG ZUR STEUERUNG DER STRÖMUNG VON FLÜSSIGEN ODER GASFÖRMIGEN MEDIEN**
DEVICE FOR CONTROLLING THE FLOW OF LIQUID OR GASEOUS MEDIA
DISPOSITIF POUR REGULER L'ECOULEMENT DE MILIEUX LIQUIDES OU GAZEUX

(30) Priorität: 03.04.2003 AT 5212003
(43) Veröffentlichungstag der Anmeldung: 28.12.2005
(73) Patentinhaber: Schwarz, Alois, A-6382 Kirchdorf in Tirol (AT)
(72) Erfinder: Schwarz, Alois, A-6382 Kirchdorf in Tirol (AT)
(74) Vertreter: Atzwanger, Richard
(86) Internationale Anmeldenummer: PCT/AT2004/000067
(87) Internationale Veröffentlichungsnummer: WO 2004/088186

(56) Entgegenhaltungen:
- EP-A- 0 829 716
- WO-A-97/04372
- DE-B- 1 239 151
- US-A- 4 215 721
- US-A- 4 570 677
- US-A- 4 749 004

## Beschreibung

Die gegenständliche Erfindung betrifft eine Einrichtung zur Steuerung der Strömung von flüssigen oder gasförmigen Medien, insbesondere eines flüssigen Heiz- bzw. Kühlmediums, in einem Leitungssystem mit einem ersten Kanal, in welchem sich ein Ventil, insbesondere ein Sperrventil, befindet und an dessen beiden Enden Anschlüsse vorgesehen sind.

Eine derartige Einrichtung ist aus der Druckschrift EP 0 829 716 bekannt.

In Leitungssystemen für technische Anlagen, wie z.B. Heizungsanlagen, Klimaanlagen und Sanitäranlagen, besteht das Erfordernis, flüssige oder gasförmige Medien wahlweise in unterschiedliche Strömungskanäle zu leiten, um hierdurch unterschiedliche Effekte zu erzielen bzw. um unterschiedlichen technischen Erfordernissen zu entsprechen. So besteht z.B. in einer Heizungsanlage das Erfordernis, das im Heizungssystem befindliche Heizungsmedium in eine Einrichtung zu leiten, in welcher aus dem Heizungsmedium in diesem enthaltene Luft entfernt wird. Soferne nämlich keine Entlüftung vorgenommen wird, sammelt sich in den Heizgeräten, z.B. in den Leitungen einer Bodenheizung oder einer Wandheizung, Luft an, durch welche der Wirkungsgrad der Heizgeräte vermindert wird bzw. Funlttionsstörungen bedingt werden können. Ebenso ist es in Anlagen, welche Filter enthalten, erforderlich, die Filter dadurch zu reinigen, dass diese in der dem Filtervorgang entgegen gesetzten Richtung mit einer Reinigungsflüssigkeit gespült werden. Analoge Spülungen sind auch bei Katalysatoren erforderlich.

Um derartige Maßnahmen vornehmen zu können, ist es bekannt, in den Leitungssystemen Steuerventile, insbesondere Dreiwegeventile, anzuordnen, durch deren Umsteuerung die erforderlichen Umleitungen vorgenommen werden können. Da es dabei erforderlich sein kann, in Leitungssystemen eine Vielzahl von Umsteuerventilen vorzusehen, wird hierdurch ein großer Montageaufwand bzw. ein sehr großer Kostenaufwand bedingt. Zudem können durch Fehlfunktionen einzelner Ventile das gesamte Leitungssystem betreffende Betriebsstörungen verursacht werden.

Der gegenständlichen Erfindung liegt somit die Aufgabe zugrunde, eine Einrichtung zur Steuerung der Strömung von Flüssigkeiten oder Gasen zu schaffen, durch welche in einem Leitungssystem eine gegenüber bekannten Steuerventilen wesentlich vergrößerte Anzahl von Umleitungen vorgenommen werden kann. Dies wird erfindungsgemäß durch die Merkmale des Anspruchs 1 erzielt.

Vorzugsweise ist zumindest ein Teil der Ventile mit jeweils einem Steuergerät ausgebildet. Nach einem bevorzugten weiteren Merkmal befindet sich das im ersten Kanal befindliche Ventil zumindest angenähert mittig zwischen den zwei weiteren Kanälen. Weiters können in den Kanälen Sensoren angeordnet sein, durch welche Steuerungsfunktionen in Abhängigkeit von Parametern der in den Kanälen strömenden Medien erfüllt werden. Vorzugsweise sind die Kanäle an ihren Enden mit Anschlußflanschen oder an jeweils einem ihrer Enden mit einem Außengewinde und am anderen Ende mit einer Überwurfmutter ausgebildet. Die Parameter können durch die Mengen oder die Temperaturen der Medien gebildet sein.

Vorzugsweise ist die Einrichtung aus einem Kunststoffmaterial, insbesondere aus glasfaserverstärktem Polyphthalimid, hergestellt, welches mit Kanälen ausgebildet ist, in welche die Ventile, welche insbesondere aus Messing, aus Keramik oder aus Kunststoff, hergestellt sind, eingesetzt sind.

Der Gegenstand der Erfindung ist nachstehend anhand eines in der Zeichnung dargestellten Ausführungsbeipieles näher erläutert. Es zeigen:
- Fig. 1: eine ersten Ausführungsform einer erfindungsgemäßen Einrichtung, in axonometrischer Darstellung;
- Fig.2: die Einrichtung nach Fig. 1, in Draufsicht;
- Fig.2a: eine erste Ausführungsvariante der Einrichtung nach Fig. 1, in Draufsicht;
- Fig.3: die Einrichtung nach Fig.1, in Seitenansicht;
- Fig.4: die Einrichtung gemäß Fig.1, in einem Schnitt nach der Linie IV-IV der Fig.2;
- Fig.4a: eine zweite Ausführungsvariante gemäß Fig.1, im Schnitt nach der Linie IV-IV der Fig.2;
- Fig.5: die Einrichtung gemäß Fig.1, im Schnitt nach der Linie V-V der Fig.2;
- Fig.6: eine zweite Ausführungsform einer erfindungsgemäßen Einrichtung, in axonometrischer Darstellung;
- Fig.7: die Einrichtung gemäß Fig.6, in Draufsicht;
- Fig.8: die Einrichtung gemäß Fig.6, in Seitenansicht;
- Fig.9: die Einrichtung gemäß Fig.6, im Schnitt nach der Linie IX-IX der Fig.7;
- Fig.10: die Einrichtung gemäß Fig.6 im Schnitt nach der Linie X-X der Fig.7;
- Fig. 11: eine Heizungsanlage mit der ersten Ausführungsform einer erfindungsgemäßen Einrichtung, und
- Fig. 11a bis 11e: die Heizungsanlage nach Fig. 11 mit zwei erfindungsgemäßen Einrichtungen, welche fünf unterschiedliche Schaltstellungen einnehmen, wodurch fünf unterschiedliche Betriebsarten ermöglicht werden.

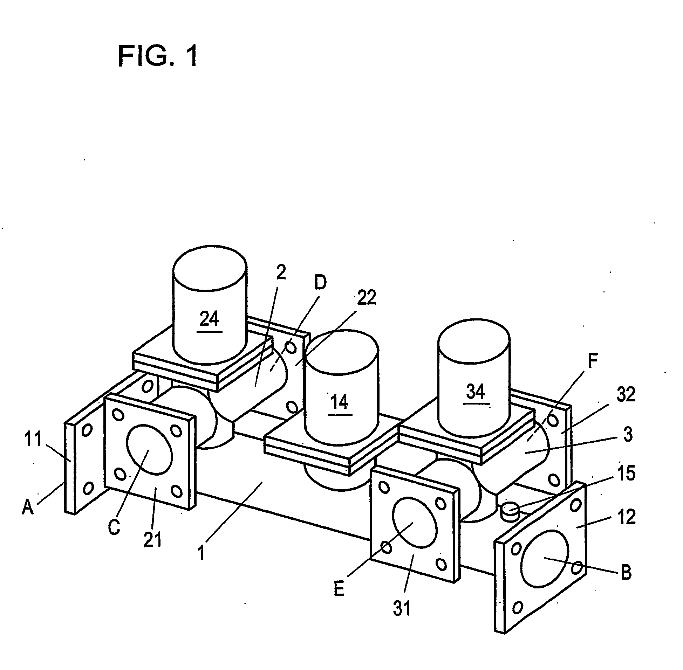

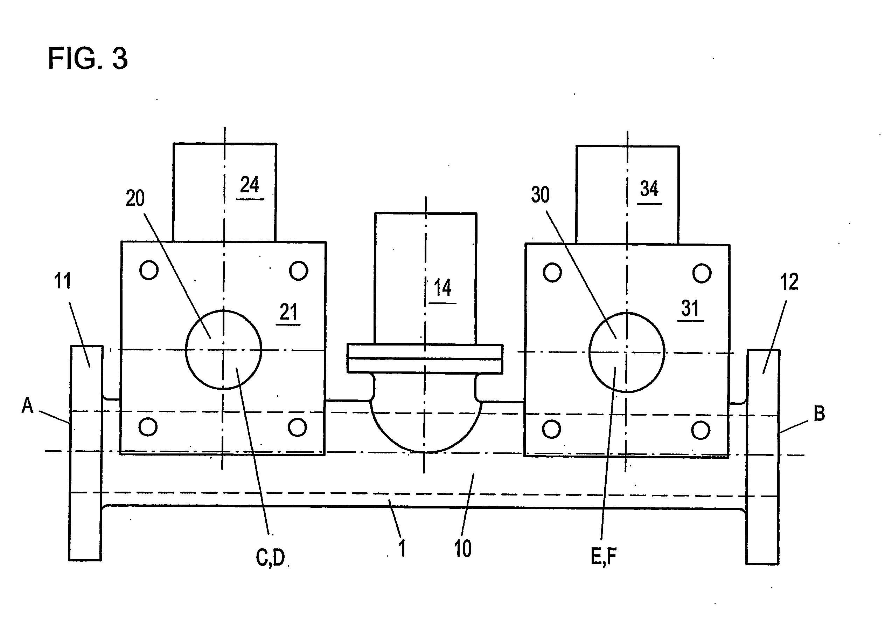

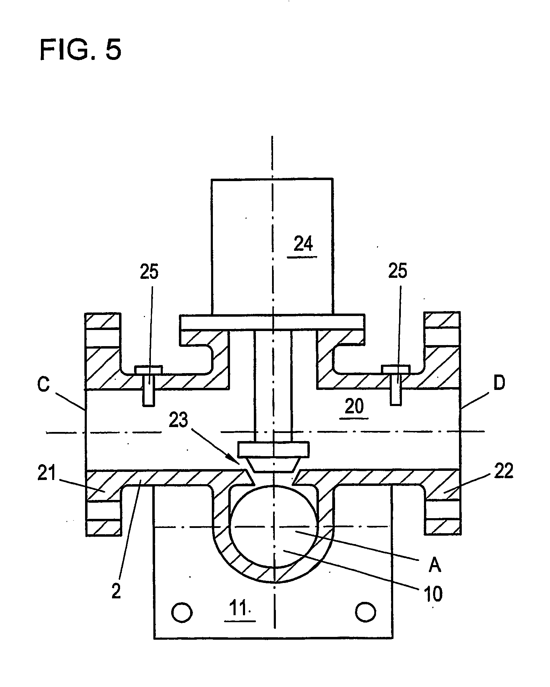

Wie dies aus den Fig. 1 bis Fig. 5 ersichtlich ist, besteht eine erfindungsgemäße Einrichtung aus einem ersten Rohrstück 1, welches an seinen beiden Enden mit Anschlußflanschen 11 und 12 ausgebildet ist. Oberhalb des ersten Rohrstückes 1 befinden sich zwei weitere Rohrstücke 2 und 3, welche gegenüber dem ersten Rohrstück 1 im rechten Winkel ausgerichtet sind, welche mit dem ersten Rohrstück 1 verbunden sind, und welche weiters an ihren Enden mit Anschlußflanschen 21 und 22 sowie 31 und 32 ausgebildet sind. Innerhalb des Strömungskanals 10 des ersten Rohrstückes. 1 befindet sich ein Sperrventil 13, welchem ein Steuergerät, z.B. ein elektrischer Stellmotor 14, zugeordnet ist. Der Strömungskanal 10 des ersten Rohrstückes 1 ist über Verbindungskanäle mit den Strömungskanälen 20 und 30 der beiden weiteren Rohrstücke 2 und 3 verbunden, wobei sich innerhalb der Verbindungskanäle weitere Sperrventile 23 und 33 befinden, welchen weitere Steuergeräte, z.B. elektrische Stellmotoren 24 und 34, zugeordnet sind. Die Steuergeräte können z.B. auch durch Thermoelemente gebildet sein.

Diese Einrichtung weist sechs Eingänge bzw. Ausgänge A, B, C, D, E und F auf, welche miteinander über die Kanäle 10, 20 und 30 verbunden sind, wobei die Strömung eines diese Einrichtung durchsetzenden Mediums mittels der Sperrventile 13, 23 und 33 gesteuert wird. In den Kanälen 10, 20 und 30 können weiters Sensoren 15, 25 und 35 vorgesehen sein, durch welche Steuerfunktionen bewirkt werden.

Soferne ein Medium über den Eingang A in den Kanal 10 eintritt und das Ventil 13 geöffnet ist, wogegen die Ventile 23 und 33 geschlossen sind, tritt es bei der Öffnung B aus. Soferne demgegenüber das Ventil 13 geschlossen ist und das Ventil 23 offen ist, tritt das Medium über den Verbindungskanal, in welchem sich das Ventil 23 befindet, in den Kanal 20 des Rohrstückes 2 über, wobei es zu einer der Öffnungen C und D gelangt. Soferne das Ventil 13 offen ist, weiters das Ventil 23 geschlossen ist und das Ventil 33 offen ist, strömt das Medium in den Kanal 30 des Rohrstückes 3, wobei es zu einer der Öffnungen E und F gelangt.
Ergänzend wird hiezu darauf verwiesen, dass die Ventile 13, 23 und 33 auch nur teilweise geöffnet sein können, wodurch insbesondere Mengensteuerungen und Temperatursteuerungen erfolgen können.
Soferne das Medium über die Öffnung C eingeleitet wird, gelangt es entweder durch den Kanal 20 hindurch zur Öffnung D. Soferne demgegenüber das Ventil 23 offen ist, strömt das Medium in den Kanal 10, von welchem es zur Öffnung A gelangt. Soferne das Ventil 13 offen ist, kann das Medium zur Öffnung B strömen. Soferne auch das Ventil 33 offen ist, kann es durch den Kanal 30 hindurch zu den Öffnungen E und F strömen.
In welcher Richtung jeweils die Strömung erfolgt, hängt davon ab, durch welche der anschließenden Leitungen hindurch eine weitere Strömung möglich ist. Weiters können die Ventile auch teilweise offen bzw. geschlossen sein.

Da analoge Strömungen zwischen allen sechs Öffnungen A bis F möglich sind, werden durch diese Einrichtung Strömungen in 15 unterschiedlichen Wegen ermöglicht, wobei zudem die Strömungen in diesen Wegen in jeweils entgegengesetzten Richtungen erfolgen können.

Somit kann mittels dieser Einrichtung, obgleich sie nur drei steuerbare Ventile, insbesondere Absperrventile, enthält, eine Vielzahl von Steuervorgängen bewirkt werden. Ungeachtet dessen, dass durch diese Einrichtung eine Vielzahl von unterschiedlichen Strömungen ermöglicht wird, weist sie einen technisch einfachen Aufbau auf, wodurch sie kostengünstig herstellbar ist. Da sie zudem nur drei Ventile enthält; ist die Gefahr von Funktionsstörungen entsprechend gering. Anstelle von Sperrventilen können auch andere Ventile, wie z.B. Druckreduzierventile, Regelventile, Überströmventile, Rückschlagventile, Druckausgleichventile, vorgesehen sein. Die Ventile können aus Metall, insbesondere aus Messing, aus Keramik oder aus Kunststoff hergestellt sein. Bei Anlagen zur Klimatisierung sind aus Kunststoff hergestellte Ventile deshalb vorteilhaft, da eine Kondenswasserbildung vermieden wird.

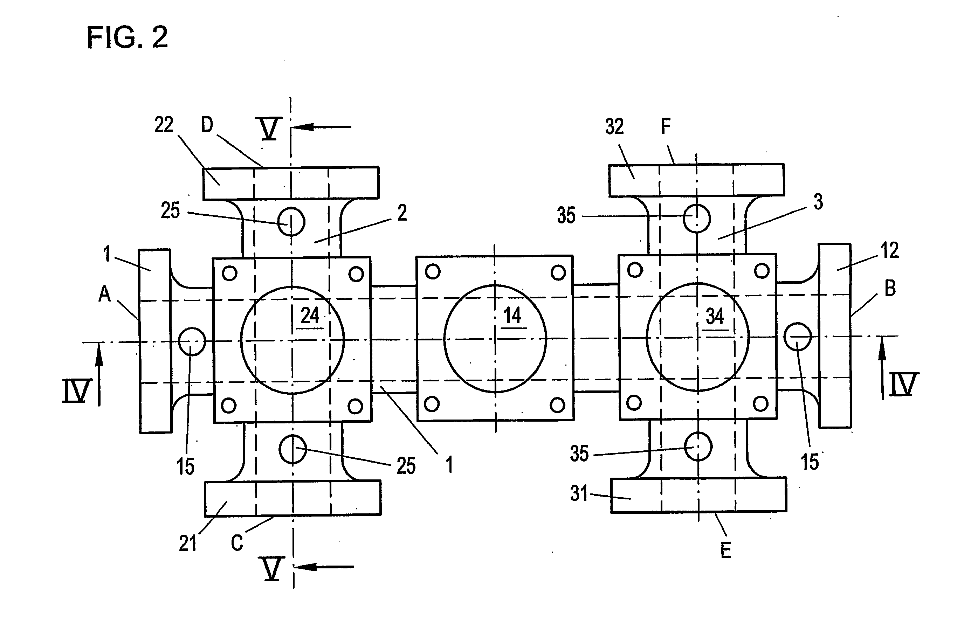

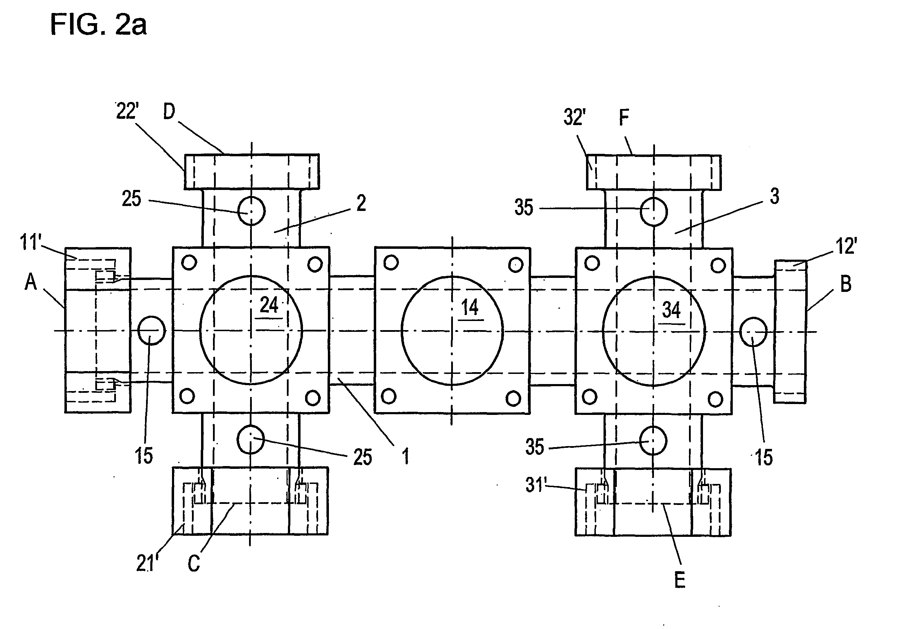

Die Verbindung der einzelnen Einrichtungen miteinander erfolgt mittels der Anschlussflansche 11, 21, 31 und 12, 22, 32 oder mittels der in Fig.2a dargestellten Außengewinde 11', 21', 31' und der diesen zugeordneten Überwurfmuttern 12', 22', 32'.

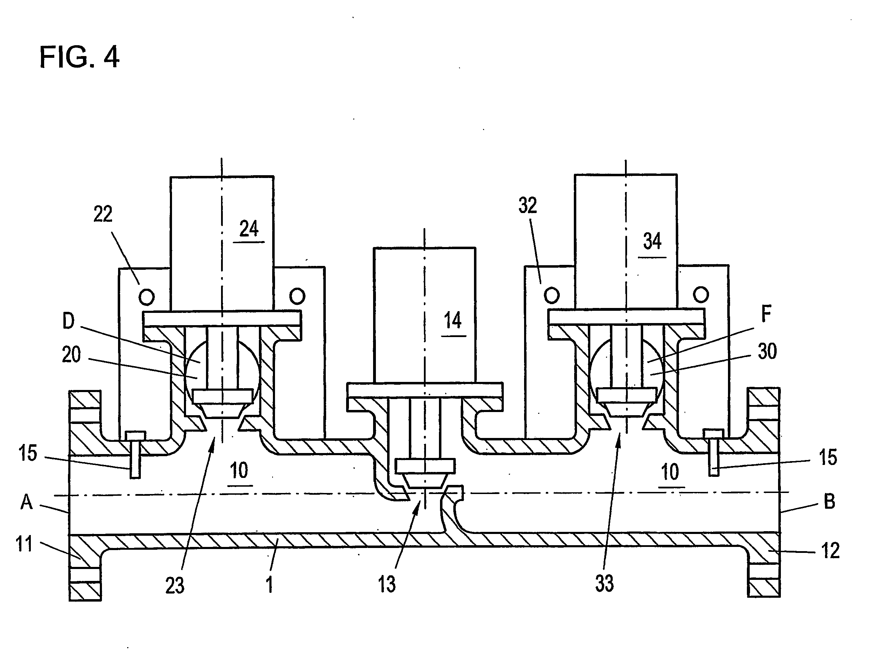

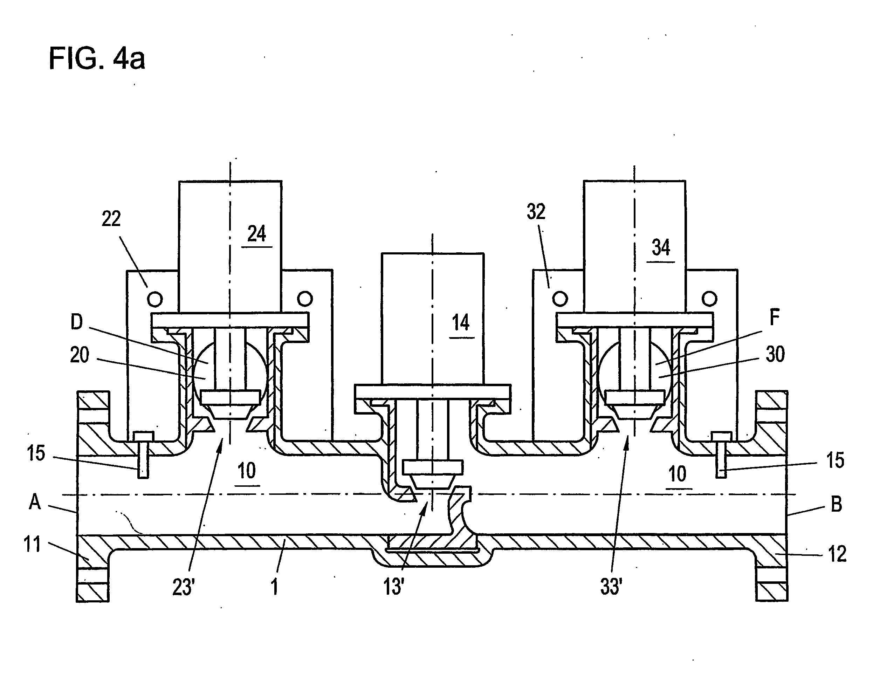

In Fig. 4a ist eine weitere Ausführungsvariante dargestellt, bei welcher die Ventile. 13', 23' und 33' in die Rohrstücke 1, 2 und 3 auswechselbar eingesetzt sind.

Anhand der Fig.1 bis 6 ist die grundsätzliche Ausbildung einer derartigen Einrichtung dargestellt. Nachstehend ist eine derartige Einrichtung erläutert, welche in kostengünstiger Weise aus Kunststoff hergestellt ist. Dabei wird ein Gehäuse 100 aus einem Kunststoff, insbesondere aus glasfaserverstärktem Polyphthalimid, in einem Spritzverfahren hergestellt, wobei sich die Kanäle innerhalb dieses Gehäuses 100 befinden und die Ventile, welche insbesondere aus Messing, aus Kunststoff oder aus Keramik bestehen, in das Gehäuse eingesetzt sind.

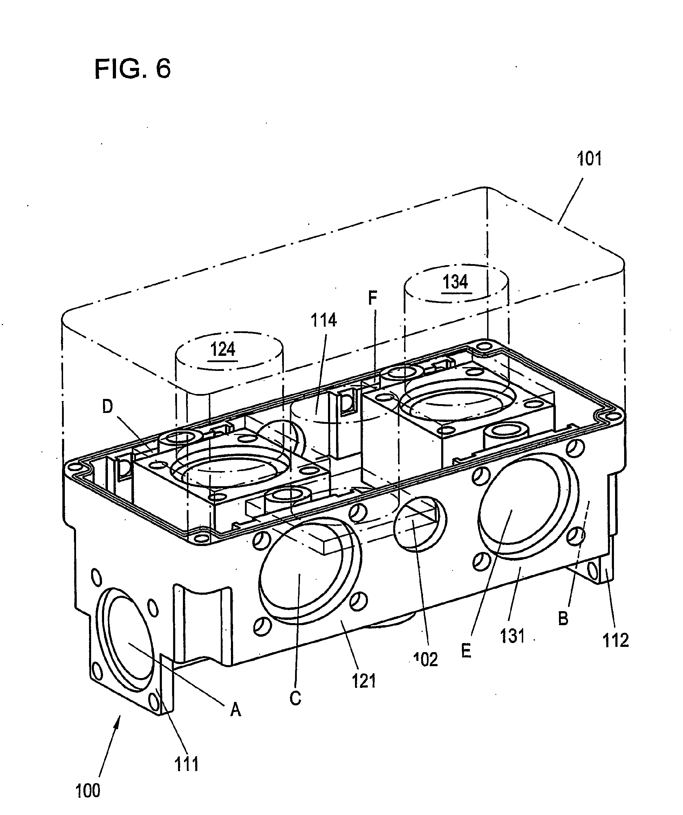

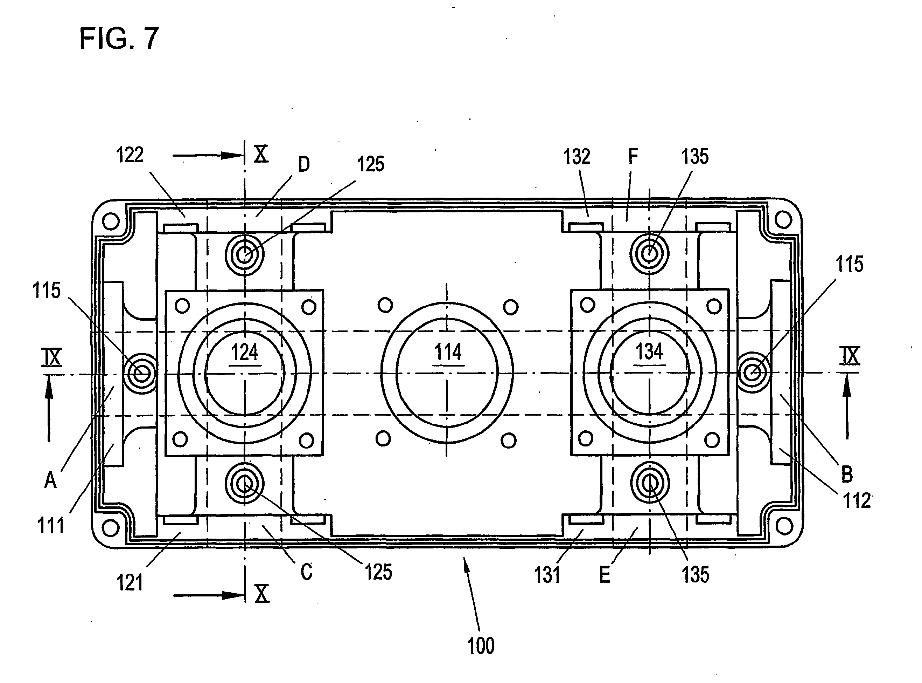

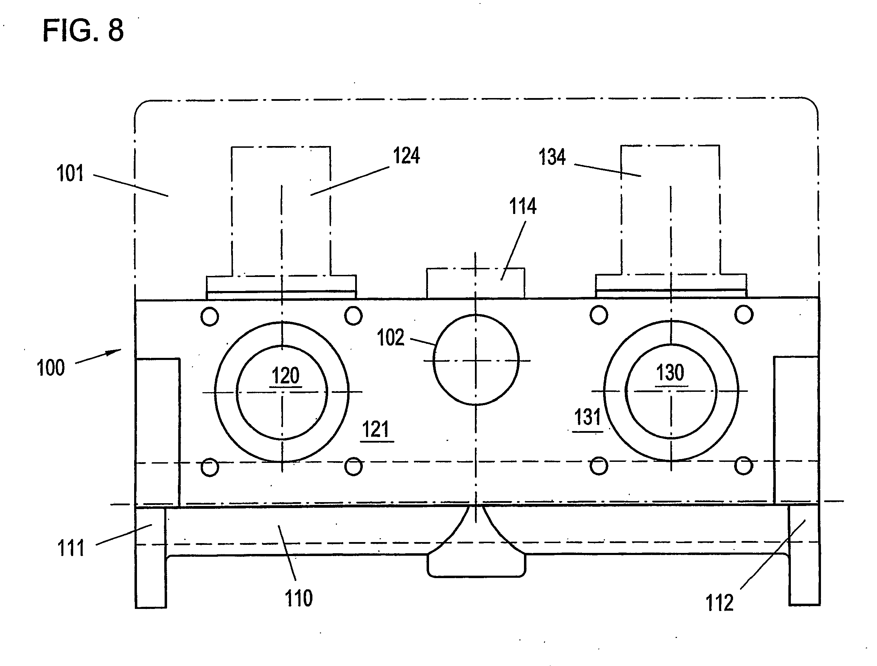

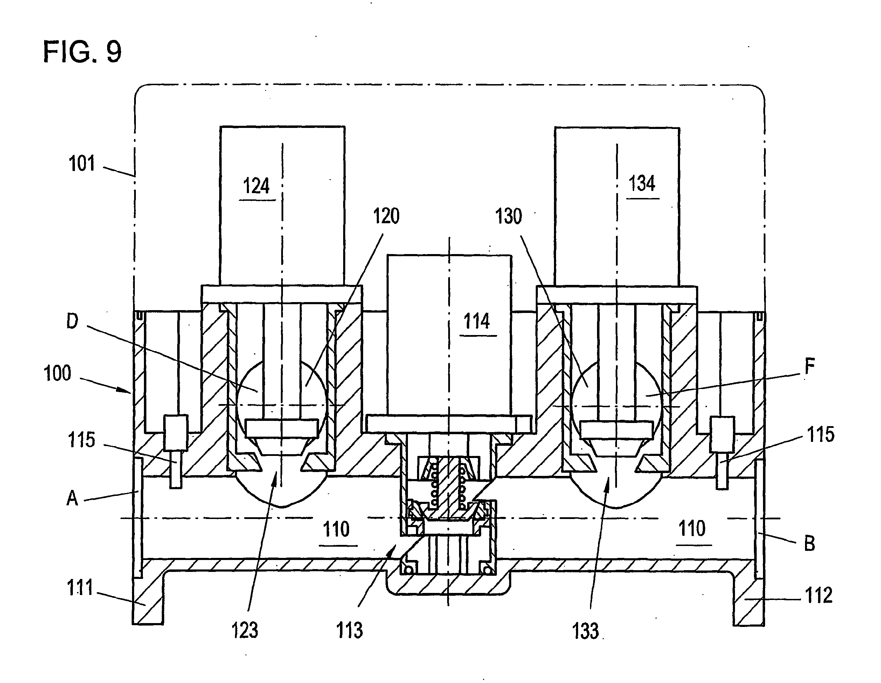

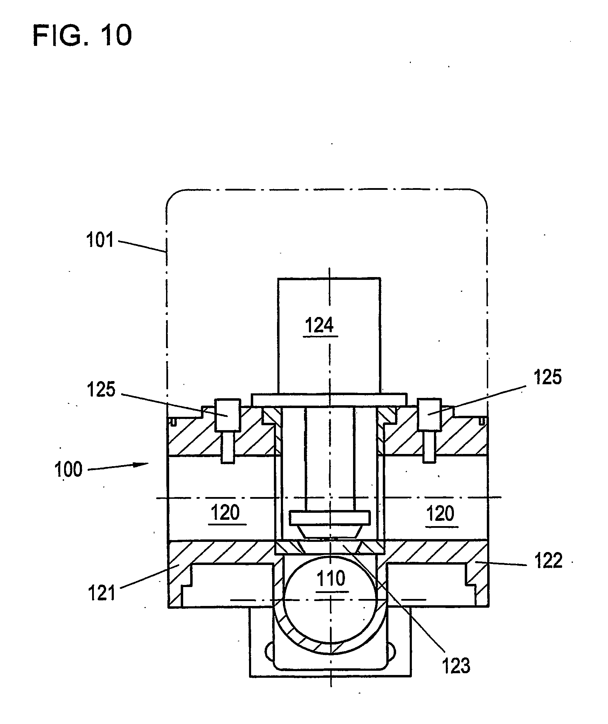

Wie dies aus den Fig.6 bis 10 ersichtlich ist, besteht diese Einrichtung aus einem Gehäuse 100, welches mit einem ersten Kanal 110 und mit zwei zu diesem im rechten Winkel ausgebildeten weiteren Kanälen 120 und 130 ausgebildet ist, wobei sich an den Enden der Kanäle 110, 120 und 130 Anschlussplatten 111, 112 und 121, 122 und 131, 132 befinden, an welchen Anschlussleitungen befestigbar sind. An der Oberseite ist das Gehäuse 100 durch eine wasserdichte Abdichtung 101 abgeschlossen. Weiters ist das Gehäuse 100 mit einem Kanal 102 ausgebildet, welcher zur Aufnahme von feuchtigkeitsdicht eingesetzten elektrischen Steuerleitungen dient.

Innerhalb des Strömungskanals 110 befindet sich ein Ventil 113, welchem ein Steuergerät, z.B. ein elektrischer Stellmotor 114, zugeordnet ist. Der Strömungskanal 110 ist über Verbindungskanäle mit den Strömungskanälen 120 und 130 verbunden, wobei sich innerhalb der Verbindungskanäle weitere Ventile 123 und 133 befinden, welchen Steuergeräte, z.B. elektrische Stellmotoren 124 und 134, zugeordnet sind.

Diese Einrichtung weist somit gleichfalls sechs Eingänge bzw. Ausgänge A, B, C, D, E und F auf, welche miteinander über die Kanäle 110, 120 und 130 verbunden sind, wobei die Strömung eines diese Einrichtung durchsetzenden Mediums mittels der Ventile 113, 123 und 133 gesteuert wird. In den Kanälen 110, 120 und 130 können weiters Sensoren 115, 125 und 135 vorgesehen sein, durch welche Steuerfunktionen bewirkt werden. Die Ventile können durch Sperrventile, Druckreduzierventile, Regelventile, Überströmventile, Rückschlagventile, Druckausgleichventile od.dgl. gebildet sein.

Soferne ein Medium über den Eingang A in den Kanal 110 eintritt und das Ventil 113 geöffnet ist, wogegen die Ventile 123 und 133 geschlossen sind, tritt es bei der Öffnung B aus. Soferne demgegenüber das Ventil 113 geschlossen ist und das Ventil 123 offen ist, tritt das Medium über den Verbindungskanal, in welchem sich das Ventil 123 befindet, in den Kanal 120 über, wobei es zu einer der Öffnungen C und D gelangt. Soferne das Ventil 113 offen ist, weiters das Ventil 123 geschlossen ist und das Ventil 133 offen ist, strömt das Medium in den Kanal 130, wobei es zu einer der Öffnungen E und F gelangt.

Soferne das Medium über die Öffnung C eingeleitet wird, gelangt es entweder durch den Kanal 120 hindurch zur Öffnung D. Soferne demgegenüber das Ventil 123 offen ist, strömt das Medium in den Kanal 110, von welchem es zur Öffnung A gelangt. Soferne das Ventil 113 offen ist, kann das Medium zur Öffnung B strömen. Soferne auch das Ventil 133 offen ist, kann es durch den Kanal 130 hindurch zu den Öffnungen E und F strömen.
In welcher Richtung jeweils die Strömung erfolgt, hängt davon ab, durch welche der anschließenden Leitungen hindurch eine weitere Strömung möglich ist.

Da analoge Strömungen zwischen allen sechs Öffnungen A bis F möglich sind, werden auch durch diese Einrichtung Strömungen in 15 unterschiedlichen Wegen ermöglicht, wobei zudem die Strömungen in diesen Wegen in jeweils entgegengesetzten Richtungen erfolgen können. Da weiters die Ventile auch teilweise offen bzw. geschlossen sein können, ist eine Vielzahl von Steuerungen nach Mengen des strömenden Mediums und nach Temperaturen möglich. Hierdurch ist diese Einrichtung in einer Vielzahl von Anlagen einsetzbar.

Somit kann mittels dieser Einrichtung, obgleich sie nur drei steuerbare Ventile enthält, eine Vielzahl von Steuervorgängen bewirkt werden. Ungeachtet dessen, dass durch diese Einrichtung eine Vielzahl von unterschiedlichen Strömungen ermöglicht wird, weist sie einen technisch einfachen Aufbau auf, wodurch sie kostengünstig herstellbar ist. Da sie zudem nur drei Ventile enthält, ist die Gefahr von Funktionsstörungen entsprechend gering.

Bei bekannten Leitungssystemen befinden sich die Leitungen im wesentlichen in einer Ebene, wobei sich auch die Anschlüsse und Verbindungen in dieser Ebene befinden. Die hohe Funktionalität der gegenständlichen Einrichtung wird dadurch erzielt, dass demgegenüber die Leitungen in zwei übereinander befindlichen Ebenen angeordnet sind, wobei sich übereinander befindliche Leitungen kreuzen und an den Kreuzungspunkten jeweils ein Ventil enthaltende Verbindungskanäle vorgesehen sind. Hierdurch ist ein räumliches Leitungssystem geschaffen, in welchem die Strömung des Mediums aus einer ersten Ebene in eine zweite Ebene bewirkt werden kann. Hierdurch wird die erläuterte hohe Funktionalität erzielt.

Durch ein Anfügen von weiteren derartigen Einrichtungen kann die Anzahl der unterschiedlichen Strömungsverläufe noch weiter erhöht werden, wodurch einer Vielzahl von technischen Erfordernissen entsprochen werden kann. Um dabei maximale Variationen zu ermöglichen, weisen vorzugsweise die einzelnen Rohrstücke den gleichen Durchmesser auf.

Nachstehend ist die Anwendung von zwei derartigen, miteinander verbundenen Einrichtungen gemäß den Fig. 1 bis 6 in einer Heizungsanlage, welche mit einer Einrichtung zur Entlüftung der Anlage ausgebildet ist, näher erläutert.

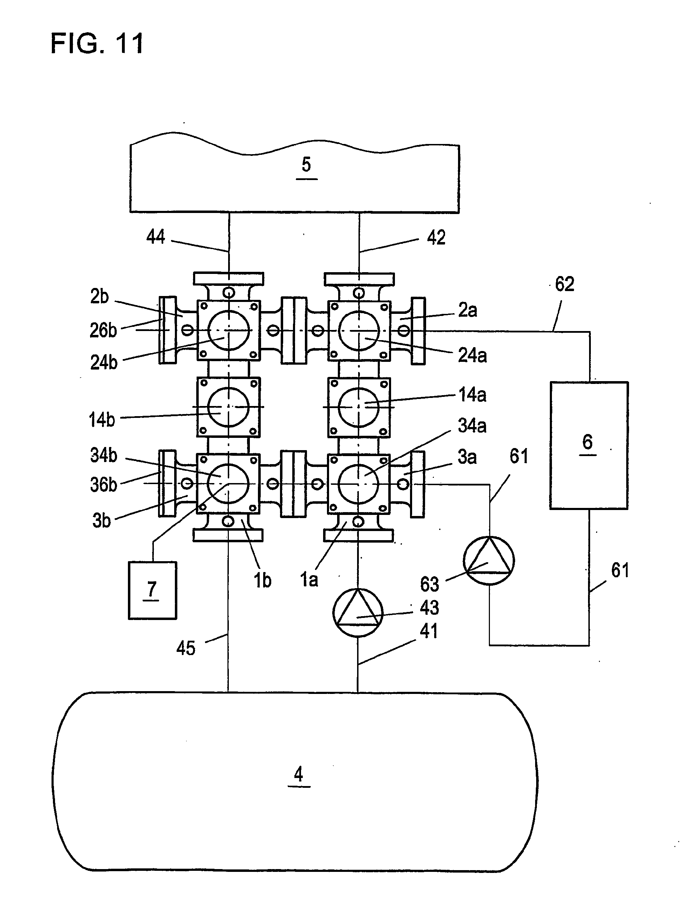

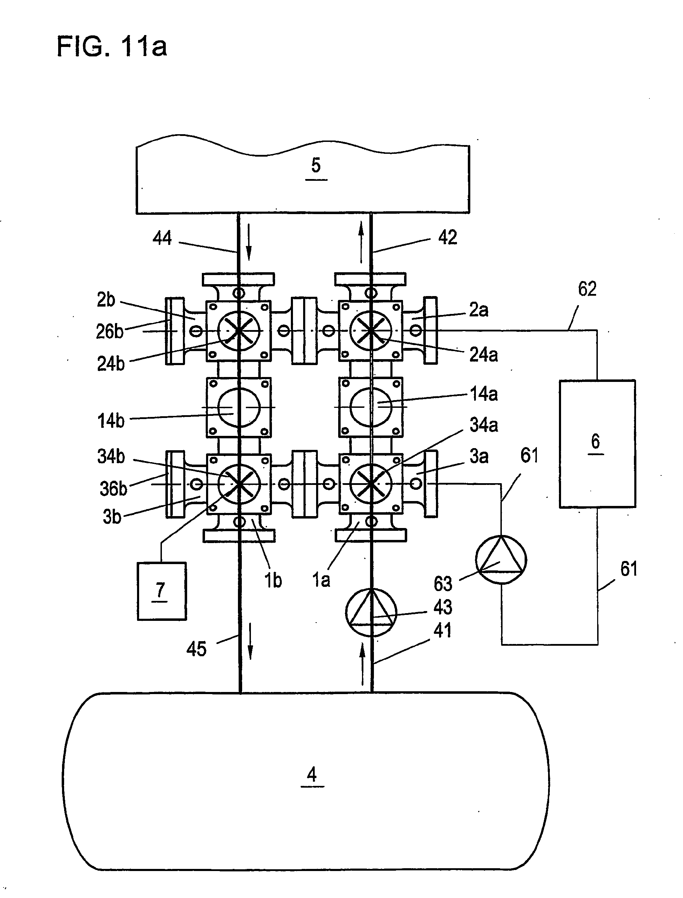

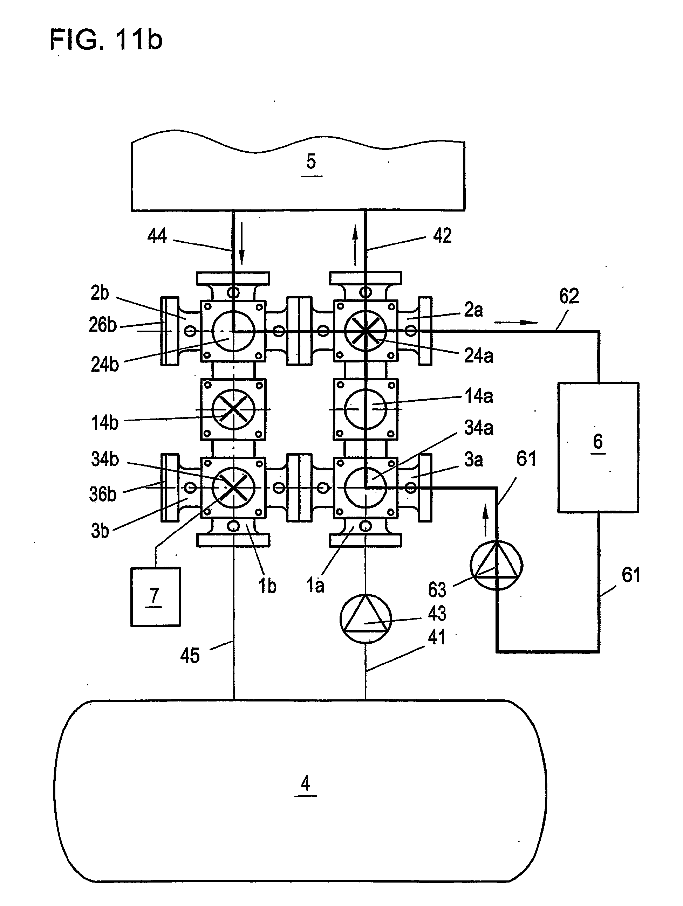

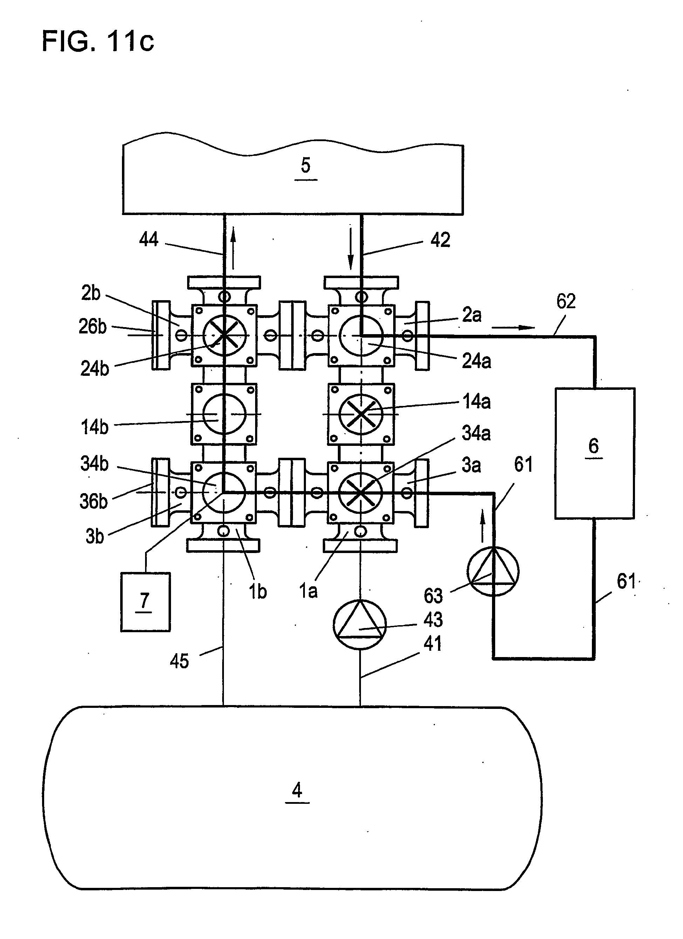

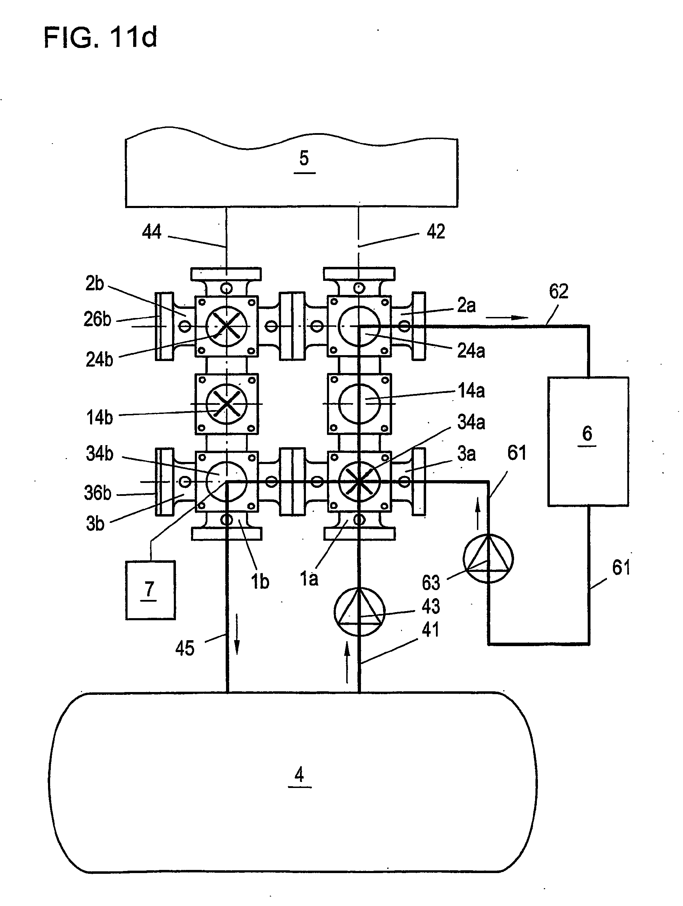

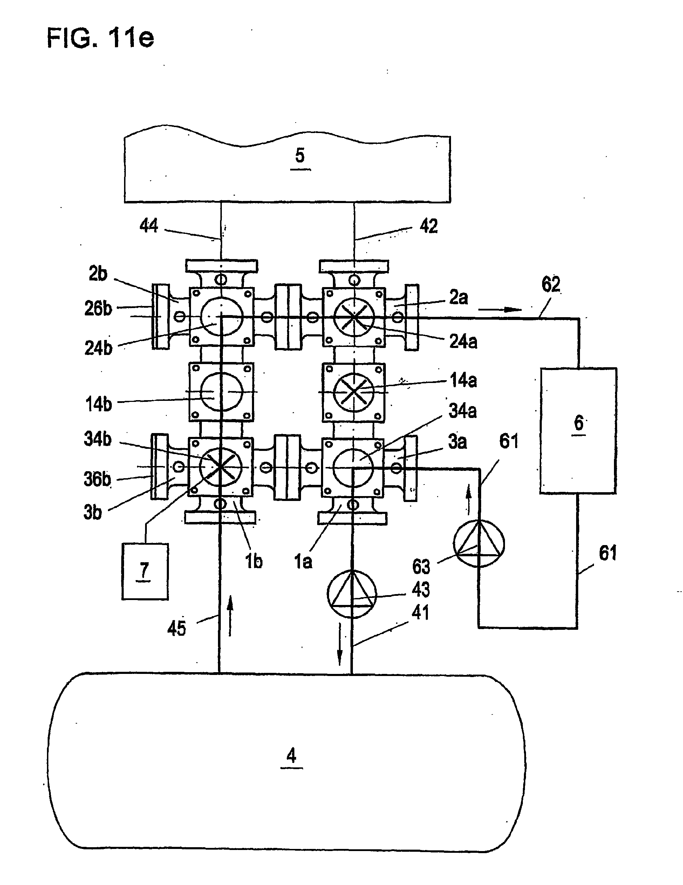

In Fig. 11 ist eine Heizungsanlage dargestellt, welche einen Heizkessel 4, einen Verbraucherkreis 5 und eine Entlüftungseinrichtung 6 enthält. In den Vorlaufleitungen 41 und 42 zum Verbraucherkreis 5 befindet sich eine Pumpe 43, mittels welcher das Heizungsmedium in den Verbraucherkreis 5 gefördert wird, wobei es über die Leitungen 44 und 45 zum Heizkessel 4 zurückströmt. An die Leitungen 41, 42 und 43, 44 ist über Leitungen 61 und 62 die Entlüftungseinrichtung 6 angeschlossen. In der Leitung 61 befindet sich weiters eine Pumpe 63. Der Anschluss der Leitungen 41 und 42 an die Leitungen 61 und 62 ist durch zwei erfindungsgemäße Steuereinrichtungen bewirkt, deren Bestandteile durch die Bezugszahlen gemäß den Fig. 1 bis 5 gekennzeichnet sind, wobei jedoch die Buchstaben a und b beigefügt sind. Diesen Einrichtungen ist eine Steuereinheit 7 zugeordnet. Die nicht benötigten Öffnungen sind durch Abdeckplatten 26b und 36b verschlossen.

Die Wirkungsweise dieser Einrichtung ist nachstehend anhand der Fig.11a bis 11 e erläutert:

Im Heizungsbetrieb, welcher in Fig. 11a dargestellt ist, sind die den Steuergeräten 34a und 24a sowie 24b und 34b zugeordneten Ventile geschlossen, wogegen die den Steuergeräten 14a und 14b zugeordneten Ventile offen sind. Hierdurch wird das Heizungsmedium aus dem Heizkessel 4 mittels der Pumpe 43 durch die Leitung 41 und das Rohrstück 1a hindurch gefördert und gelangt es über die Leitung 42 in den Verbraucherkreis 5, von welchem es über die Leitung 44, das Rohr 1b und die Leitung 45 wieder in den Heizkessel 4 zurückströmt.

Soferne demgegenüber, wie dies in Fig. 11b dargestellt ist, das im Verbraucherkreis 5 befindliche Heizungsmedium durch die Einrichtung 6 hindurch geleitet werden soll, um es zu entlüften, werden die den Steuergeräten 34a und 14a zugeordneten Ventile geöffnet, wogegen das dem Steuergerät 24a zugeordnete Ventil geschlossen wird. Weiters wird das dem Steuergerät 24b zugeordnete Ventil geöffnet und werden die den Steuergeräten 14b und 34b zugeordneten Ventile geschlossen.
Hierdurch wird das im System befindliche Heizungsmedium mittels der Pumpe 63 über die Leitung 61 in das Rohrstück 3a gefördert, von welchem es über das Rohrstück 1a und über die Leitung 42 in den Heizkreis 5 gelangt. Vom Heizkreis 5 gelangt das Heizungsmedium über die Leitung 44 in das Rohrstück 1b. Aus diesem tritt es in die Rohrstücke 2b und 2a über und gelangt es über die Leitung 62 in die Einrichtung 6 zurück, in welcher es entlüftet wird.

In Fig.11c sind die Ventile so gesteuert, dass das Heizungsmedium den Verbraucherkreis 5 in entgegengesetzter Richtung durchströmt. Hierfür sind die den Steuergeräten 34b, 14b und 24a zugeordneten Ventile geöffnet, wogegen die den Steuergeräten 34a, 24b und 14a zugeordneten Ventile geschlossen sind. Hierdurch erfolgt die Strömung über die Leitung 61, das Rohrstück 3a, das Rohrstück 3b, das Rohrstück 1b und die Leitung 44 in das Verbrauchersystem 5, wobei der Rückfluss über die Leitung 42, das Rohrstück 1a und das Rohrstück 2a sowie die Leitung 62 zur Entlüftungseinrichtung 6 erfolgt.

In analoger Weise erfolgt, wie dies in Fig. 11d dargestellt ist, eine Spülung des Heizungskessels 4 zur Entfernung von in diesem enthaltener Luft über die Leitung 61, die Rohrstücke 3a und 3b, das Rohrstück 1b und die Leitung 45 in den Heizungskessel 4 sowie über die Leitung 41, das Rohrstück 1a sowie die Leitung 62 in die Entlüftungseinrichtung 6 zurück, wobei die den Steuereinrichtungen 34a, 14b und 24b zugeordneten Ventile geschlossen sind und die den Steuereinrichtungen 34b, 14a und 24a zugeordneten Ventile geöffnet sind.

Eine Spülung des Heizungskessels 4 in der entgegengesetzten Richtung, welche in Fig.11e dargestellt ist, setzt voraus, dass die den Steuergeräten 34a, 14b und 24b zugeordneten Ventile offen sind, wogegen die den Steuergeräten 34b, 24a und 14a zugeordneten Ventile geschlossen sind.

Aus diesem Beispiel ist erkennbar, dass durch die Kombination der übereinander befindlichen Rohrstücke mit den in diesen sowie in den Verbindungskanälen befindlichen Ventile mehrere Wirkungsweisen möglich sind, welche bei bekannten Leitungsanordnungen mit Dreiwegeventilen eine wesentlich größere Anzahl von Ventilen voraussetzen würden. Durch weitere Kombinationen derartiger Einrichtungen kann in einfacher Weise eine sehr große Anzahl von Steuerungsfunktionen ausgeführt werden. Vorzugsweise weisen zur Ermöglichung beliebiger Kombinationen sämtliche Rohrstücke den gleichen Durchmesser auf.

Die Anschlußelemente können durch Anschlußplatten oder durch Gewindestücke einerseits und Überwurfmuttern andererseits gebildet sein. Die Steuergeräte können durch Thermoelemente oder durch Stellmotoren gebildet sein. Zudem kann auch eine manuelle Steuerung der Ventile vorgesehen sein. Die Ventile sind durch Sperrventile, Druckreduzierventile, Regelventile, Überströmventile, Rückschlagventile Druckausgleichventile od.dgl., gebildet. Mittels der Sensoren kann eine Steuerung der Ventile in Abhängigkeit von Parametern, z.B. der Mengen oder der Temperaturen, der in den Rohrstücken strömenden Medien erfolgen, wobei die Ausgänge der Sensoren an eine elektronische Steuereinheit gelegt sind.

## Patentansprüche

1. Einrichtung zur Steuerung der Strömung von flüssigen oder gasförmigen Medien, insbesondere eines flüssigen Heiz- bzw. Kühlmediums, in einer Leitung mit einem Kanal (10), in welchem sich ein Ventil, insbesondere ein Sperrventil (13), befindet und an dessen beiden Enden Anschlüsse (11, 12) vorgesehen sind, wobei zwei weitere zu einem einzigen ersten Kanal (10) im rechten Winkel ausgerichtete und zueinander parallel verlaufende Kanäle (20, 30) vorgesehen sind, wobei der erste Kanal (10) mit den beiden weiteren Kanälen (20, 30) über jeweils ein Ventil (23, 33) verbunden ist und weiters das im ersten Kanal (10) vorgesehene Ventil (13) sich zwischen den zu den beiden weiteren Kanälen (20, 30) führenden Ventilen (23, 33) befindet, **dadurch gekennzeichnet, daß** sich der erste Kanal (10) im Abstand von der durch die beiden weiteren Kanäle (20, 30) gebildeten Ebene befindet.

2. Einrichtung nach Anspruch 1, **dadurch gekennzeichnet, dass** zumindest ein Teil der Ventile (13, 23, 33) mit jeweils einem Steuergerät (14, 24, 34) ausgebildet ist.

3. Einrichtung nach einem der Ansprüche 1 und 2, **dadurch gekennzeichnet, dass** sich das im ersten Kanal (10) befindliche Ventil (13) zumindest angenähert mittig zwischen den zwei weiteren Kanälen (20, 30) befindet.

4. Einrichtung nach einem der Ansprüche 1 bis 3, **dadurch gekennzeichnet, dass** in den Kanälen (10, 20, 30) Sensoren (15, 25, 35) angeordnet sind.

5. Einrichtung nach einem der Ansprüche 1 bis 4, **dadurch gekennzeichnet, dass** die Kanäle (10, 20, 30) an ihren Enden mit Anschlüssen (11, 12, 21, 22, 31, 32), insbesondere mit Flanschen, ausgebildetsind.

6. Einrichtung nach einem der Ansprüche 1 bis 5, **dadurch gekennzeichnet, dass** die Kanäle (10, 20, 30) an jeweils einem ihrer Enden mit einer Überwurfmutter (11', 21', 31') und am anderen Ende mit einem Innengewinde (12', 22', 32') ausgebildet sind.

7. Einrichtung nach einem der Ansprüche 1 bis 6, **dadurch gekennzeichnet, dass** die Ventile in das Ventilgehäuse auswechselbar eingesetzt sind.

8. Einrichtung nach einem der Ansprüche 1 bis 8, **dadurch gekennzeichnet, dass** die Kanäle gleiche Strömungsquerschnitte aufweisen.

9. Einrichtung nach einem der Ansprüche 1 bis 8, **dadurch gekennzeichnet, dass** sie aus einem Kunststoffmaterial, insbesondere aus glasfaserverstärktem Polyphthalimid, hergestellt ist, welches mit Kanälen (10, 20, 30) ausgebildet ist, in welche die Ventile (13, 23, 33) eingesetzt sind.

## Claims

1. An apparatus for controlling the flow of liquid or gaseous media, in particular a liquid heating or cooling medium, in a pipeline with a channel (10), in which there is located a valve, in particular a check valve (13), and at the two ends of which there are provided connections (11, 12), two further channels (20, 30) being provided which are oriented at right angles to a single first channel (10) and extend parallel to one another, the first channel (10) being connected to the two further channels (20, 30) in each case via a valve (23, 33) and additionally the valve (13) provided in the first channel (10) being located between the valves (23, 33) leading to the further two channels (20, 30), **characterised in that** the first channel (10) is located at a distance from the plane formed by the two further channels (20, 30).

2. An apparatus according to claim 1, **characterised in that** at least some of the valves (13, 23, 33) are provided in each case with a control device (14, 24, 34).

3. An apparatus according to either one of claims 1 and 2, **characterised in that** the valve (13) located in the first channel (10) is located at least approximately centrally between the two further channels (20, 30).

4. An apparatus according to any one of claims 1 to 3, **characterised in that** sensors (15, 25, 35) are arranged in the channels (10, 20, 30).

5. An apparatus according to any one of claims 1 to 4, **characterised in that** the channels (10, 20, 30) are provided at their ends with connections (11, 12, 21, 22, 31, 32), in particular with flanges.

6. An apparatus according to any one of claims 1 to 5, **characterised in that** the channels (10, 20, 30) are provided in each case at one of their ends with a union nut (11', 21', 31') and at the other end with an internal thread (12', 22', 32'),

7. An apparatus according to any one of claims 1 to 6, **characterised in that** the valves are inserted in replaceable manner into the valve housing.

8. An apparatus according to any one of claims 1 to 8, **characterised in that** the channels exhibit identical flow cross-sections.

9. An apparatus according to any one of claims 1 to 8, **characterised in that** it is made from a plastics material, in particular glass fibre-reinforced polyphthalimide, which is constructed with channels (10, 20, 30) into which the valves (13, 23, 33) are inserted.

## Revendications

1. Dispositif pour commander l'écoulement de produits liquides ou gazeux, en particulier un agent chauffant ou réfrigérant liquide, dans une canalisation avec un conduit (10) dans lequel se trouve une soupape, en particulier un clapet antiretour (13), et aux deux extrémités duquel sont prévus des raccordements (11, 12), étant précisé qu'il est prévu deux autres conduits (20, 30) placés à angle droit par rapport à un premier conduit unique (10) et parallèles entre eux, et que le premier conduit (10) est relié aux deux autres (20, 30) par des soupapes respectives (23, 33) et la soupape (13) prévue dans le premier conduit (10) se trouve entre les soupapes (23, 33) menant aux deux autres conduites (20, 30),
**caractérisé en ce que** le premier conduit (10) se trouve à une certaine distance du plan défini par les deux autres conduits (20, 30).

2. Dispositif selon la revendication 1, **caractérisé en ce qu'**une partie au moins des soupapes (13, 23, 33) est pourvue d'un appareil de commande (14, 24, 34).

3. Dispositif selon la revendication 1 ou 2, **caractérisé en ce que** la première soupape (13) qui se trouve dans le conduit (10) se trouve au moins approximativement à mi-distance entre les deux autres conduits (20, 30).

4. Dispositif selon l'une des revendications 1 à 3, **caractérisé en ce que** des capteurs (15, 25, 35) sont disposés dans les conduits (10, 30, 30).

5. Dispositif selon l'une des revendications 1 à 4, **caractérisé en ce que** les conduits (10, 20, 30) sont pourvus à leurs extrémités de raccordements (11, 12, 21, 22, 31, 32), en particulier de brides.

6. Dispositif selon l'une des revendications 1 à 5, **caractérisé en ce que** les conduits (10, 20, 30) sont pourvus, à une extrémité, d'un écrou-raccord (11', 21', 31') et, à l'autre extrémité, d'un filetage intérieur (12', 22', 32').

7. Dispositif selon l'une des revendications 1 à 6, **caractérisé en ce que** les soupapes sont placées dans le carter de soupape de manière à pouvoir être changées.

8. Dispositif selon l'une des revendications 1 à 8, **caractérisé en ce que** les conduits ont la même section transversale d'écoulement.

9. Dispositif selon l'une des revendications 1 à 8, **caractérisé en ce qu'**il est fabriqué à partir d'une matière plastique, en particulier du polyphthalimide renforcé par des fibres de verre, qui comporte des conduits (10, 20, 30) dans lesquels sont placées les soupapes (13, 23, 33).
